# FASCICULE DE BREVET EUROPEEN

(11) **EP 3 336 486 B1**
(45) Date de publication et mention de la délivrance du brevet: **03.07.2019**
(21) Numéro de dépôt: 17203610.5
(22) Date de dépôt: 24.11.2017
(51) Int. Cl.: A63B 24/00, G01B 15/02, G01C 5/06

(54) **PROCÉDÉ DE DÉTECTION ET DE CALCUL DE HAUTEUR D'UN SAUT**
VERFAHREN ZUR ERKENNUNG UND BERECHNUNG DER HÖHE EINES SPRUNGS
METHOD FOR DETECTING AND CALCULATING THE HEIGHT OF A JUMP

(30) Priorité: 12.12.2016 EP 16203363
(43) Date de publication de la demande: 20.06.2018
(73) Titulaire: The Swatch Group Research and Development Ltd, 2074 Marin (CH)
(72) Inventeur: GERMIQUET, Christophe, 2515 Prêles (CH); FERRI, Yvan, 1004 Lausanne (CH); WILLEMIN, Michel, 2515 Prêles (CH)
(74) Mandataire: ICB SA

(56) Documents cités:
- RU-C1- 2 570 667
- US-A1- 2002 116 147
- US-A1- 2016 136 482

## Description

L'invention se rapporte à un procédé de détection et de calcul de hauteur d'un saut. Le procédé est particulièrement adapté à la détection et au calcul de hauteur d'un saut effectué globalement vers le bas (selon un référentiel terrestre) et sans l'aide de moyens de déplacement pour prendre de l'élan avant le saut. C'est notamment le cas d'un saut dans l'eau, par exemple depuis une falaise, un plongeoir ou un pont.

Par hauteur, on entend la différence entre l'altitude de l'individu ou du sportif au moment où il débute le saut, et l'altitude du sportif à sa réception. Dans le cas d'un saut dans l'eau, on appelle réception l'entrée du sportif dans l'eau.

Par saut globalement vers le bas, on n'exclut pas les cas où le sportif prendrait une impulsion de départ le faisant partir vers le haut avant d'être entraîné vers le bas par la gravité, si la hauteur parcourue vers le haut est négligeable par rapport à la hauteur parcourue vers le bas.

Par moyens de déplacement permettant de prendre de l'élan avant le saut, on entend des moyens externes au sportif et au contact du sol avant le saut, tels qu'un vélo, un skateboard, des skis, un snowboard, des rollers, etc.

### Arrière-plan de l'invention

On connaît du document US2016/136482 un procédé de mesure de la hauteur d'un saut par un appareil multifonction, pouvant prendre par exemple la forme d'une montre, dans le cadre de l'amélioration de la qualité de sessions sportives sur l'eau, par exemple de surf, kite surf, windsurf, wake board ou paddle board.

On connaît du document US2002/0116147 un procédé de détection d'un saut au moyen d'une unité de mesure montée sur des moyens de déplacement utilisés par un sportif pour prendre de l'élan avant le saut et se trouvant en contact avec le sol avant et après le saut. Les moyens de déplacement sont par exemple des skis ou un snowboard. Une unité de calculs, par exemple une montre portée par le sportif, permet de déterminer et d'afficher des paramètres du saut, notamment la durée du saut, à partir des mesures réalisées par l'unité de mesure. Plus précisément, l'unité de mesure relève des vibrations des moyens de déplacement, pour détecter lorsque les moyens de déplacement quittent le sol et retournent au sol, ce qui permet de détecter un saut.

Ce procédé présente l'inconvénient de ne pouvoir être utilisé que lorsque le sportif utilise des moyens de déplacement soumis à des vibrations au contact du sol et lui permettant de prendre de la vitesse avant le saut. Ce dispositif n'est donc pas adapté aux sauts effectués sans ce genre de moyens.

### Résumé de l'invention

Le but de la présente invention est de pallier l'inconvénient cité précédemment.

A cet effet, l'invention se rapporte à un procédé de détection et de calcul de hauteur d'un saut effectué par un individu, comportant les étapes suivantes : une détection d'une réception consécutive au saut, cette étape comprenant une sous-étape de détection d'un pic de pression d'amplitude supérieure à une première amplitude seuil, au sein de mesures de pression fournies par un capteur de pression embarqué dans une montre portée au poignet de l'individu, et un calcul d'une hauteur du saut par différence d'une altitude de départ correspondant à une dernière pression stable mesurée avant le pic de pression et d'une altitude d'arrivée correspondant à une première pression stable mesurée après le pic de pression. Une pression stable est définie comme une pression dont les variations n'excèdent pas 0,1 hectopascals pendant au moins 2 secondes.

L'invention tire profit du constat qu'une réception consécutive à un saut est à l'origine d'un fort pic de pression observé au sein des données mesurées par un capteur de pression ou d'un altimètre. Une détection d'un pic de pression ou d'altitude est donc un indice d'une réception au sol.

Lorsqu'une réception a été détectée, les mesures de pression relevées pendant les instants précédant et suivant cette réception sont utilisées pour calculer la hauteur du saut. En effet, dans le cas d'un saut effectué globalement vers le bas et sans l'aide de moyens de déplacement pour prendre de l'élan avant le saut, les mesures de pression présentent deux phases stables : l'une précédant le saut, l'autre suivant la réception après le saut. Naturellement, durant ces phases stables, les pressions instantanées peuvent varier, mais les mesures de pression oscillent autour d'une valeur stable.

Outre les caractéristiques précitées, le procédé selon l'invention peut comprendre les caractéristiques suivantes, prises seules ou en combinaison selon toutes les combinaisons techniquement possibles.

Dans un mode de réalisation non limitatif, l'étape de détection d'une réception comprend également une sous-étape de détection d'un pic d'accélération d'amplitude supérieure à une deuxième amplitude seuil, à partir de mesures d'accélération fournies par un accéléromètre trois axes embarqué dans la montre, et une sous-étape de comparaison de l'instant associé au pic d'accélération et de l'instant associé au pic de pression.

Par mesure d'accélération, on entend la norme d'un vecteur d'accélération à 3 composantes, c'est-à-dire la racine carrée de la somme des carrés des composantes.

Les caractéristiques avantageuses précitées tirent profit du constat qu'une réception consécutive à un saut est à l'origine d'un fort pic d'accélération observé au sein des données mesurées par un accéléromètre triaxial. Une détection d'un pic d'accélération est donc un indice d'une réception qui permet de confirmer qu'un saut a bien eu lieu par corrélation avec le pic de pression.

Dans un mode de réalisation non limitatif, la deuxième amplitude seuil est supérieure à 2g, où g est l'accélération de la pesanteur à la surface de la terre, c'est-à-dire 9,80665 m.s⁻².

Dans un mode de réalisation non limitatif, la première amplitude seuil est supérieure à 10 hectopascals.

### Description sommaire des dessins

D'autres particularités et avantages ressortiront clairement de la description qui en est faite ci-après, à titre indicatif et nullement limitatif, en référence aux dessins annexés, dans lesquels :
- La figure 1 représente une montre électronique permettant la mise en oeuvre du procédé selon un mode de réalisation non limitatif de l'invention.
- La figure 2 montre une courbe représentant des mesures de pression au cours d'un saut dans l'eau depuis une falaise.
- La figure 3 montre un diagramme fonctionnel représentatif des étapes du procédé selon un mode de réalisation non limitatif de l'invention.

### Description détaillée des modes de réalisation préférés

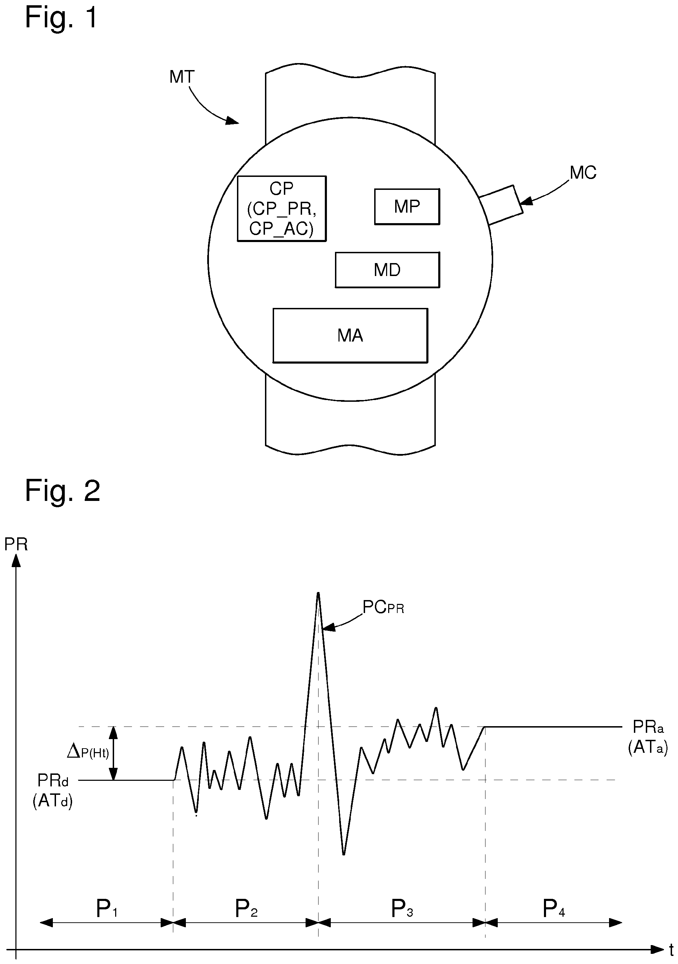

Dans un mode de réalisation non limitatif, le procédé METH selon l'invention est intégralement mis en oeuvre par une montre MT électronique portée par un individu réalisant un saut. Dans un mode de réalisation non limitatif montré à la figure 1, la montre MT comporte :
- un ensemble de capteurs CP, dont un accéléromètre CP_AC et un capteur de pression CP_PR (ou altimètre)
- une mémoire MD pour enregistrer des mesures réalisées par les capteurs CP. Les mesures sont avantageusement enregistrées dans la mémoire de manière glissante, selon le principe FIFO (« first in, first out »)
- un microprocesseur MP pour traiter les informations contenues dans la mémoire MD
- des moyens d'affichage MA numériques ou analogiques, pour afficher les résultats des calculs réalisés par le microprocesseur MP
- des moyens d'activation MC, mécaniques, électroniques ou tactiles, des capteurs CP, de la mémoire MD, du microprocesseur MP et des moyens d'affichage MA, permettant de déclencher le procédé PR.

La figure 2 montre une courbe représentant la pression PR mesurée par le capteur de pression CP_PR de la montre MT en fonction du temps t, et en particulier lors de quatre phases P₁, P₂, P₃ et P₄.

Dans la première phase P₁, l'individu est en contact avec le sol. Durant cette première phase, la pression PR_{d} mesurée par le capteur de pression CP_PR est sensiblement constante. Cette pression permet de calculer une altitude AT_{d} dite de départ. Puis, l'individu décolle du sol et se retrouve rapidement en chute libre, ce qui correspond à la deuxième phase P₂. Ensuite, l'individu entre dans l'eau (il se réceptionne), et nage alors pour sortir de l'eau, ce qui correspond à la troisième phase P₃. Le début de la troisième phase P₃ est reconnaissable grâce au pic de pression PC_{PR} visible sur la première courbe. Enfin, dans une quatrième phase P₄, l'individu sort de l'eau et est à nouveau en contact avec le sol. Durant cette quatrième phase P₄, la pression PRₐ mesurée par le capteur de pression CP_PR est sensiblement constante. Cette pression permet de calculer une altitude ATₐ dite d'arrivée.

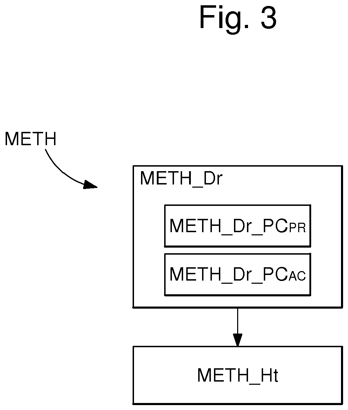

Une première étape du procédé METH selon l'invention consiste à détecter qu'un saut a été effectué (étape METH_Dr sur la figure 3). Plus particulièrement, l'étape de détection METH_Dr comporte une première sous-étape METH_Dr_PC_{PR} consistant à détecter un pic de pression PC_{PR} dans les mesures fournies par le capteur de pression CP_PR. En effet, lorsqu'un saut est effectué, on observe un pic de pression PC_{PR} à l'instant correspondant à la réception au sol de l'individu. Lorsqu'un tel pic PC_{PR} est détecté, il est comparé à une valeur seuil au-delà de laquelle il est décidé que le pic PC_{PR} correspond bien à une réception au sol consécutive à un saut.

Dans un mode de réalisation, pour confirmer que ce pic de pression PC_{PR} correspond bien à une réception consécutive à un saut, l'étape de détection METH_Dr comporte également une deuxième sous-étape METH_Dr_PC_{AC} consistant à détecter un pic d'accélération PC_{AC} dans les mesures fournies par l'accéléromètre CP_AC. Un tel pic d'accélération PC_{AC} devrait être relevé à un instant sensiblement identique à celui auquel le pic de pression PC_{PR} a été détecté. Les instants correspondants au pic de pression PC_{PR} et au pic d'accélération PC_{AC} sont donc comparés. Si la norme de la différence entre ces instants est inférieure à une valeur seuil, par exemple 0.5 seconde, alors il est décidé que les pics PC_{PR}, PC_{AC} correspondent bien à une réception au sol consécutive à un saut.

Une deuxième étape du procédé METH selon l'invention consiste à calculer la hauteur Ht du saut (étape METH_Ht). Pour cela, l'altitude d'arrivée ATₐ est retranchée à l'altitude de départ AT_{d}. On note que l'altitude de départ AT_{d} est calculée au moyen de la dernière pression stable PR_{d} mesurée avant la réception, c'est-à-dire la pression stable relevée durant la première phase P₁. L'altitude d'arrivée ATₐ est calculée au moyen de la première pression stable PRₐ mesurée après la réception, c'est-à-dire la pression stable relevée durant la quatrième phase P₄.

Bien entendu, la présente invention ne se limite pas à l'exemple illustré mais est susceptible de diverses variantes et modifications qui apparaîtront à l'homme de l'art.

## Revendications

1. Procédé (METH) de détection et de calcul de hauteur d'un saut effectué par un individu, comportant les étapes suivantes :
- Une détection (METH_Dr) d'une réception consécutive au saut, cette étape comprenant une sous-étape de détection (METH_Dr_PC_{PR}) d'un pic de pression (PC_{PR}) d'amplitude supérieure à une première amplitude seuil, au sein de mesures de pression (PR) fournies par un capteur de pression (CP_PR) embarqué dans une montre (MT) portée au poignet de l'individu,
- Un calcul (METH_Ht) d'une hauteur (Ht) du saut par différence d'une altitude de départ (AT_{d}) correspondant à une dernière pression stable (PR_{d}) mesurée avant le pic de pression (PC_{PR}) et d'une altitude d'arrivée (Atₐ) correspondant à une première pression stable (PRₐ) mesurée après le pic de pression (PC_{PR}) via le capteur de pression (CP_PR), une pression stable étant définie comme une pression dont les variations n'excèdent pas 0,1 hectopascals pendant au moins 2 secondes.

2. Procédé (METH) selon la revendication précédente, l'étape de détection (METH_Dr) d'une réception comprenant une sous-étape de détection (METH_Dr_PC_{AC}) d'un pic d'accélération (PC_{AC}) d'amplitude supérieure à une deuxième amplitude seuil, à partir de mesures d'accélération (AC) fournies par un accéléromètre (CP_AC) trois axes embarqué dans la montre (MT), et une sous-étape de comparaison de l'instant associé au pic d'accélération (PC_{AC}) et de l'instant associé au pic de pression (PC_{PR}).

3. Procédé (METH) selon la revendication précédente, dans lequel la deuxième amplitude seuil est supérieure à 2g, où g est l'accélération de la pesanteur à la surface de la Terre.

4. Procédé (METH) selon l'une des revendications précédentes, dans lequel la première amplitude seuil est supérieure à 10 hectopascals.

## Patentansprüche

1. Verfahren (METH) zur Erkennung und Berechnung der Höhe eines von einer Person ausgeführten Sprungs, umfassend die folgenden Schritte:
- Erkennung (METH_Dr) einer Landung nach einem Sprung, wobei dieser Schritt einen Unterschritt zur Erkennung (METH_Dr_PC_{PR}) einer Druckspitze (PC_{PR}) umfasst, mit einer Amplitude höher als eine erste Schwellenamplitude, innerhalb von den Druckmessungen (PR), die von einem Drucksensor (CP_PR) bereitgestellt werden, der in eine am Handgelenk der Person getragene Uhr (MT) eingebaut ist,
- Berechnung (METH_Ht) einer Höhe (Ht) des Sprungs anhand der Differenz zwischen einer Starthöhe (AT_{d}), die einem letzten stabilen Druck (PR_{d}) entspricht, der vor der Druckspitze (PC_{PR}) gemessen wurde, und einer Ankunftshöhe (Atₐ), die einem ersten stabilen Druck (PRₐ) entspricht, der nach der Druckspitze (PC_{PR}) mittels des Drucksensors (CP_PR) gemessen wurde, wobei ein stabiler Druck als ein Druck definiert ist, dessen Schwankungen während mindestens 2 Sekunden 0,1 hPa nicht überschreiten.

2. Verfahren (METH) nach dem vorhergehenden Anspruch, wobei der Schritt zur Erkennung (METH_Dr) einer Landung einen Unterschritt zur Erkennung (METH_Dr_PC_{AC}) einer Beschleunigungsspitze (PC_{AC}) mit einer Amplitude höher als eine zweite Schwellenamplitude anhand von Beschleunigungsmessungen (AC), die von einem dreiachsigen Beschleunigungsmesser (CP_AC) bereitgestellt werden, der in die Uhr (MT) eingebaut ist, und einen Unterschritt zum Vergleichen des der Beschleunigungsspitze (PC_{AC}) zugeordneten Zeitpunkts und des der Druckspitze (PC_{PR}) zugeordneten Zeitpunkts umfasst.

3. Verfahren (METH) nach dem vorhergehenden Anspruch, wobei die zweite Schwellenamplitude größer als 2g ist, wobei g die Erdbeschleunigung an der Erdoberfläche ist.

4. Verfahren (METH) nach einem der vorhergehenden Ansprüche, wobei die erste Schwellenamplitude höher als 10 hPa ist.

## Claims

1. Method (METH) of detecting and calculating height of a jump performed by an individual, comprising the following steps:
- A detection (METH_Dr) of a reception subsequent to the jump, this step comprising a sub-step (METH_Dr_PC_{PR}) of detecting a pressure spike (PC_{PR}) of amplitude greater than a first threshold amplitude, within pressure measurements (PR) provided by a pressure sensor (CP_PR) embedded aboard a watch (MT) worn on the wrist of the individual,
- A calculation (METH_Ht) of a height (Ht) of the jump by differencing a starting altitude (AT_{d}) corresponding to a last stable pressure (PR_{d}) measured before the pressure spike (PC_{PR}) and a finishing altitude (Atₐ) corresponding to a first stable pressure (PRₐ) measured after the pressure spike (PC_{PR}) via the pressure sensor (CP_PR), a stable pressure being defined as a pressure whose variations do not exceed 0.1 hectopascals for at least 2 seconds.

2. Method (METH) according to the preceding claim, the step (METH_Dr) of detecting a reception comprising a sub-step (METH_Dr_PC_{AC}) of detecting an acceleration spike (PC_{AC}) of amplitude greater than a second threshold amplitude, on the basis of acceleration measurements (AC) provided by a three-axis accelerometer (CP_AC) embedded aboard the watch (MT), and a sub-step of comparing the instant associated with the acceleration spike (PC_{AC}) and the instant associated with the pressure spike (PC_{PR}).

3. Method (METH) according to the preceding claim, in which the second threshold amplitude is greater than 2g, where g is the acceleration of gravity at the Earth's surface.

4. Method (METH) according to one of the preceding claims, in which the first threshold amplitude is greater than 10 hectopascals.
